(19) Europäisches Patentamt
European Patent Office
Office européen des brevets

(11) **EP 0 531 559 B1**

(12) **EUROPÄISCHE PATENTSCHRIFT**

(45) Veröffentlichungstag und Bekanntmachung des Hinweises auf die Patenterteilung:
**03.05.2000 Patentblatt 2000/18**

(51) Int. Cl.$^7$: **G06F 13/28**

(21) Anmeldenummer: **91115190.0**

(22) Anmeldetag: **09.09.1991**

(54) **Steuereinrichtung zur Steuerung der Datenübertragung zwischen einem von mehreren Ein-/Ausgabemodulen und dem Arbeitsspeicher einer Datenverarbeitungsanlage**

Controller to control data transfer between one of several input-output modules and the main memory of a data-processing device

Dispositif de commande pour commander une transmission de données entre un, parmi plusieurs modules d'entrée et de sortie et une mémoire de travail d'un dispositif de traitement de données

(84) Benannte Vertragsstaaten:
**AT BE CH DE ES FR GB IT LI NL SE**

(43) Veröffentlichungstag der Anmeldung:
**17.03.1993 Patentblatt 1993/11**

(73) Patentinhaber:
**Siemens Nixdorf Informationssysteme Aktiengesellschaft 33102 Paderborn (DE)**

(72) Erfinder:
• **Lange, Kurt, Dipl.-Ing. (FH) W-8000 München 83 (DE)**
• **Theimer, Manfred, Dipl.-Ing. (FH) W-8000 München 70 (DE)**

(74) Vertreter:
**Epping, Wilhelm, Dr.-Ing. et al Patentanwalt Postfach 22 13 17 80503 München (DE)**

(56) Entgegenhaltungen:
EP-A- 0 109 308          EP-A- 0 303 752
EP-A- 0 359 137

• IBM TECHNICAL DISCLOSURES BULLETIN Bd. 30, Nr. 4, 1. September 1987, ARMONK,NY,USA Seiten 1519 - 1523; 'High speed message buffers for input/output processors to minimize buffer not-available messages'

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Steuereinrichtung zur Steuerung der Datenübertragung zwischen einem von mehreren Ein-/Ausgabemodulen und dem Arbeitsspeicher einer Datenverarbeitungsanlage gemäß dem Oberbegriff des Patentanspruches 1.

Eine Datenverarbeitungsanlage besteht üblicherweise aus zentralen Einheiten, wie Verarbeitungseinheit, Arbeitsspeicher und gegebenenfalls selbständigem Ein-/Ausgabeprozessor, sowie aus einer Reihe von Ein-/Ausgabemodulen zur Ansteuerung peripherer Geräte. Ein gemeinsames Ein-/Ausgabeleitungssystem, an das die Ein-/Ausgabemodule direkt angeschlossen sind, mit einer Schnittstellensteuerung zur Ankopplung an eine Zugriffssteuerung für den Arbeitsspeicher, dient zur Übertragung von Daten und Steuerinformationen zwischen den über die Ein-/Ausgabemodule erreichbaren peripheren Geräten und dem Arbeitsspeicher der Datenverarbeitungsanlage.

Eine Anforderung zur Durchführung einer Informations- und Datenübertragung wird jeweils von einem der Ein-/Ausgabemodule ausgelöst, und mit jeder Anforderung der Datenaustausch zwischen dem Ein-/Ausgabemodul und dem Arbeitsspeicher von der Schnittstellensteuerung abgewickelt. Dabei weist die Schnittstellensteuerung eine Steuereinrichtung mit einem Pufferspeicher auf, in dem die von dem Ein-/Ausgabemodul jeweils bereitgestellten und über das Ein-/Ausgabeleitungssystem übertragenen Dateneinheiten (Bytes) gespeichert werden. Die Anzahl der an den Arbeitsspeicher weiterzuleitenden Dateneinheiten ist durch die Datenbreite an der Arbeitsspeicherschnittstelle festgelegt, so daß ein Byte oder mehrere Doppelwörter in Form eines Datenblocks (z.B. 64 Byte) mit jeder Anforderung zum Arbeitsspeicher übertragbar sind. Dabei erfolgt das Einschreiben der zum Datenblock gehörigen Dateneinheiten in den Arbeitsspeicher ausgerichtet auf die Blockgrenzen.

Bei einer Schreiboperation für ein Doppelwort (8 Byte) werden vom Ein-/Ausgabemodul in einem Parameterwort zusätzliche Auswahlinformationen in Form von Byteselektoren an den Arbeitsspeicher übermittelt, mit denen jede zu ändernde Dateneinheit (Byte) des im Arbeitsspeicher anzusteuernden Doppelworts individuell auswählbar ist. Für den Fall, daß die Schreiboperation einen aus einer vorgegebenen maximalen Anzahl von Dateneinheiten (z.B. 64 Byte) bestehenden Datenblock umfaßt, erfolgt immer die Speicherung des gesamten Blocks, wobei die Byteselektoren keine Bedeutung haben. Die Übertragung eines derartigen Datenblocks kann bekanntlich in der Weise durchgeführt werden, daß nach Anlegen einer Startadresse die zum Block gehörigen Dateneinheiten kontinuierlich in Form eines ununterbrochenen Datenstromes (Datenstromverfahren) dem Arbeitsspeicher übergeben werden.

Aus EP 0 303 752 A1 ist eine Übertragung von nicht an einer vorgegebenen Grenze, zum Beispiel Doppelwortgrenze, ausgerichteten Datenportionen in den Pufferspeicher bekannt. Für diese Übertragung ist eine Steuereinrichtung zur Steuerung der Datenübertragung zwischen einem von mehreren Ein-/Ausgabemodulen und dem Arbeitsspeicher einer Datenverarbeitungsanlage bekannt.

Aus EP 0 109 308 A2 ist bekannt, dass bei einer Datenübertragung zwischen einem Ein-/Ausgabemodul und einer Datenverarbeitungsanlage die Daten in vollständigen Datenblöcken übertragen und im Pufferspeicher zwischengespeichert werden.

Bei Datenverarbeitungsanlagen der eingangs genannten Art mit einem Ein-/Ausgabeleitungssystem für eine Vielzahl von Ein-/Ausgabemodulen kann es bei der seriellen Abwicklung der anstehenden Datenübertragungen wegen nicht rechtzeitiger Abnahme der von den peripheren Geräten gelieferten Daten zu zeitlichen Engpässen kommen, die die Verarbeitungsleistung im System beeinträchtigen.

Es ist Aufgabe der Erfindung, eine Steuereinrichtung zur Steuerung der Datenübertragung zwischen einem Ein-/Ausgabemodul und dem Arbeitsspeicher einer Datenverarbeitungsanlage zu schaffen, durch das die Engpässe bei der Übertragung von Datenblöcken vermieden werden, so daß die Verarbeitungsleistung bei der Durchführung von Ein-/Ausgabeanforderungen insgesamt gesteigert wird.

Diese Aufgabe wird gemäß der Erfindung durch die kennzeichnenden Merkmale des Patentanspruches 1 gelöst.

Demnach wird mit einer Anforderung von dem Ein-/Ausgabemodul ein zusammenhängender, aus einer niedrigeren Anzahl von Dateneinheiten bestehender, gültiger Bereich im vollständig in den Pufferspeicher der Steuereinrichtung übertragenen Datenblock gekennzeichnet. Die Kennzeichnung erfolgt durch Steuerinformationen, die ebenfalls von dem Ein-/Ausgabemodul zusammen mit dem jeweiligen Datenblock an die Steuereinrichtung übergeben werden.

Der komplett übernommene Datenblock wird in einzelne Teilblöcke mit jeweils gleicher Anzahl von Dateneinheiten unterteilt und anhand der vom Ein-/Ausgabemodul bereitgestellten Steuerinformationen die Anzahl der vom gültigen Datenbereich erfaßten Teilblöcke ermittelt. Daran anschließend erfolgt die portionsweise Übertragung nur der erfaßten Teilblöcke zusammen mit jeweils aus den Steuerinformationen abgeleiteten Auswahlinformationen für die einzelnen Dateneinheiten des jeweiligen Teilblocks zum Arbeitsspeicher.

Die Erfindung bietet den Vorteil, daß lediglich der gültige Datenbereich in dem aus einer Vielzahl von Dateneinheiten bestehenden Datenblock in den Arbeitsspeicher eingeschrieben wird. Damit lassen sich die zeitlichen Engpässe bei der Weiterleitung der von den peripheren Geräten oftmals unter Echtzeitbedingungen abzunehmenden Daten mindern. Ein weiterer Vorteil besteht darin, daß für die Übertragung des in einem vollständigen Datenblock partiell gültigen Bereichs eine Änderung der Schnittstelle zu den Ein-/Ausgabemodulen und der Arbeitsspeicherschnittstelle nicht erforderlich ist. Die für die Ein-/Ausgabemodule zusätzlich ausführbare Schreiboperation wird in gleicher Weise wie alle übrigen Speicheroperationen von der Steuereinrichtung abgewickelt.

Gemäß einer Weiterbildung der Erfindung enthalten die vom Ein-/Ausgabemodul bereitgestellten Steuerinformationen ein Identifikationszeichen zur Kennzeichnung der Übertragung eines nur partiell gültigen Datenblocks sowie eine Anfangs- und eine Endadresse zur Festlegung des gültigen Bereichs im übertragenen Datenblock. Die Anfangsadresse zeigt dabei auf die erste gültige Dateneinheit im ersten gültigen Teilblock, während durch die Endadresse die letzte gültige Dateneinheit im letzten gültigen Teilblock festgelegt ist.

Gemäß einer anderen Weiterbildung der Erfindung wird von der Steuereinrichtung für jede Übertragung eines Teilblocks eine zugehörige Adresse erzeugt, mit der der Arbeitsspeicher angesteuert wird. Dabei weist diese Adresse eine zur Ansteuerung des Teilblocks im Arbeitsspeicher individuell festgelegte Teilblockadresse auf. Die Teilblockadresse wird jeweils von einem Adreßzähler geliefert, der mit der in den Steuerinformationen enthaltenen Anfangsadresse geladen und jeweils nach Durchführung jeder Teilübertragung um einen festgelegten Adressenwert erhöht wird.

Die Auswahlinformationen für die einzelnen Dateneinheiten des jeweiligen Teilblocks werden gemäß einer Weiterbildung der Erfindung abhängig von der jeweils überlieferten Anfangs- und Endadresse gebildet. Die Bildung erfolgt in der Weise, daß ein binärer Wert für jede Dateneinheit eines Teilblocks gesetzt und zu den vom Ein-/Ausgabemodul bereitgestellten Steuerinformationen hinzugefügt wird.

Weitere Ausgestaltungen der Erfindung betreffen die Verwendung von Blockzählern, die mit einem der Anzahl der nacheinander zum Arbeitsspeicher zu übertragenden Teilblöcke entsprechenden Startwert geladen und nach jeder Teilübertragung um einen Zählerwert vermindert werden, sowie auf einen zur Ansteuerung des Pufferspeichers vorgesehenen Adreßzähler, der auf eine Adresse für den ersten zu übertragenen Teilblock eingestellt und in gleicher Weise wie der Adreßzähler für die Erzeugung der jeweiligen Teilblockadresse verändert wird.

Die Erfindung wird anhand eines in der Zeichnung dargestellten Ausführungsbeispiels näher erläutert. Im einzelnen zeigen

FIG 1 das Blockschaltbild einer Datenverarbeitungsanlage mit einer Vielzahl von Ein-/Ausgabemodulen und dem Arbeitsspeicher,

FIG 2 das Blockschaltbild einer mit dem Arbeitsspeicher über ein Bussystem gekoppelten Steuereinrichtung,

FIG 3 eine Darstellung der von der Steuereinrichtung empfangenen und an den Arbeitsspeicher weitergeleiteten Adressen- und Steuerinformationen für die Übertragung eines zusammenhängenden Datenbereichs in einem Datenblock,

FIG 4 das Blockschaltbild einer Auswerte- und Steuereinheit zur Erzeugung der Adressen und Auswahlinformationen der vom Datenbereich erfaßten Teilblöcke, und

FIG 5a und FIG 5b das Ablaufdiagramm einer Schreiboperation zwischen einem Ein-/Ausgabemodul und dem Arbeitsspeicher.

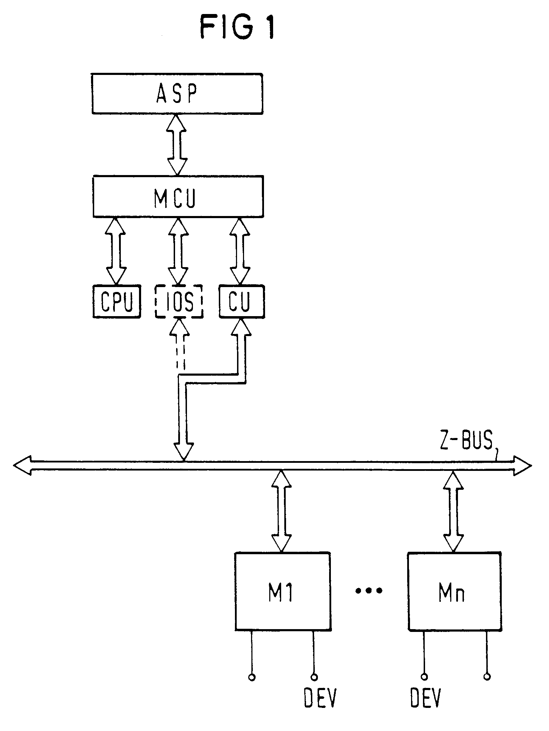

Das Blockschaltbild gemäß FIG 1 zeigt eine Datenverarbeitungsanlage, bei der von einzelnen Ein-/Ausgabemodulen Ml...Mn mit angeschlossenen peripheren Geräten DEV jeweils eine Speicheranforderung zur Durchführung einer Übertragung von Daten und Steuerinformationen ausgelöst wird. Mit jeder angenommenen Speicheranforderung erfolgt ein Datentransfer zu oder von einem Arbeitsspeicher ASP, auf den von mindestens einer Verarbeitungseinheit CPU und gegebenenfalls von einem Ein-/Ausgabewerk IOS einschließlich eines selbständigen Ein-/Ausgabeprozessors zugegriffen werden kann. Für den Fall, daß die Datenverarbeitungsanlage das Ein-/Ausgabewerk IOS aufweist, wird die zu einer Speicheranforderung gehörige Daten- und Informationsübertragung vom Ein-/Ausgabeprozessor gesteuert.

Ist das Ein-/Ausgabewerk IOS nicht vorgesehen, übernimmt eine Steuereinrichtung CU die Steuerung der Datenübertragung zwischen dem anfordernden Ein-/Ausgabemodul, beispielsweise M1, und dem Arbeitsspeicher ASP. Abhängig vom Aufbau der Datenverarbeitungsanlage kommuniziert entweder die Steuereinrichtung CU oder das Ein-/Ausgabewerk IOS in gleicher Weise wie die Verarbeitungseinheit(en) über eine Verbindungseinrichtung MCU, die beispielsweise von einem Bussystem gebildet wird, mit dem Arbeitsspeicher ASP. Eine Kopplung der Steuereinrichtung CU oder des Ein-/Ausgabewerkes IOS mit den Ein-/Ausgabemodulen Ml...Mn wird durch Anschluß an ein gemeinsames Ein-/Ausgabeleitungssystem Z-BUS ermöglicht.

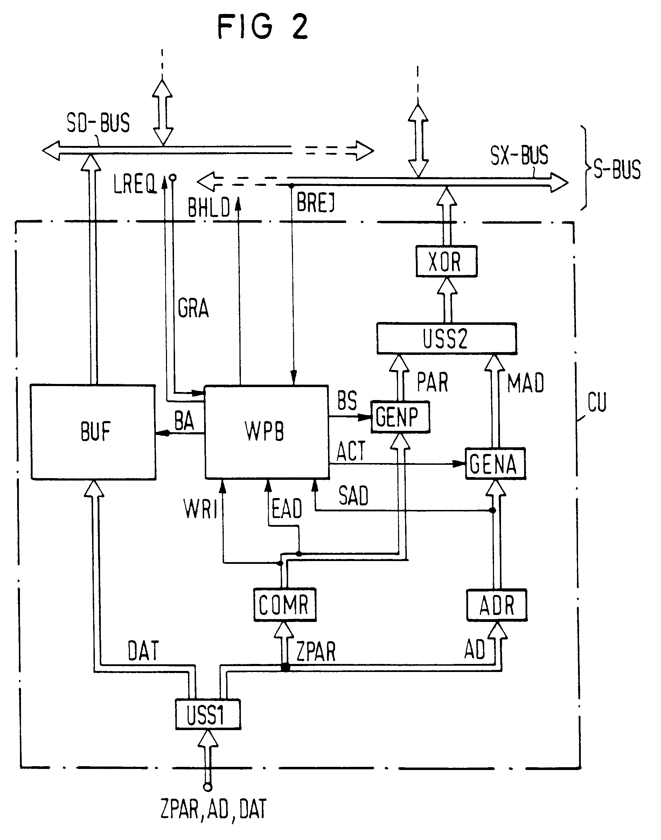

Am Beispiel der im Blockschaltbild gemäß FIG 2 dargestellten Steuereinrichtung CU wird die Durchführung einer gesonderten Speicheranforderung zur Übertragung eines aus einer Vielzahl von Dateneinheiten bestehenden Datenblocks erläutert. Ein Bussystem S-BUS, bestehend aus einem Teilbus SD-BUS für die Übertragung der Daten und einem Teilbus SX-BUS für die Übertragung der Steuerinformationen, bildet die Kommunikationsschnittstelle zum Arbeitsspeicher ASP. Die vom anfordernden Ein-/Ausgabemodul initiierte Speicheranforderung ist ein Schreibzugriff, dessen zugehörige Daten DAT und Steuerinformationen ZPAR, AD über das Ein-/Ausgabeleitungssystem zur Steuereinrichtung CU übermittelt werden.

In der Steuereinrichtung CU werden die Steuerinformationen ZPAR, AD zwischengespeichert, indem ein Parameterwort ZPAR in ein Parameterregister COMR und eine Speicheradresse AD zur Ansteuerung des Arbeitsspeichers ASP in ein Adressenregister ADR sowie die bereitgestellten Daten DAT in einen Pufferspeicher BUF eingetragen werden. Die Umleitung der Daten bzw. Steuerinformationen auf ihren jeweiligen Daten- bzw. Steuerpfad erfolgt dabei durch einen Umsteuerschalter USS1. Der Daten- und der Steuerpfad sind im Blockschaltbild lediglich in einer Übertragungsrichtung von den Modulen zum Arbeitsspeicher gezeichnet, da es sich bei der Speicheranforderung gemäß der Erfindung um eine Schreiboperation handelt.

Die aus dem anfordernden Ein-/Ausgabemodul übersandten Daten DAT bestehen aus einem Datenblock, der eine Vielzahl von Dateneinheiten (Bytes) aufweist. Es können beispielsweise Datenblöcke mit mehreren Doppelwörtern (16, 32, 64 Byte) mit jeder Anforderung zur Steuereinrichtung CU übertragen werden, wobei üblicherweise ein vollständig gültiger Datenblock im Pufferspeicher BUF der Steuereinrichtung CU zwischengespeichert und anschließend zum Arbeitsspeicher weitergeleitet wird. Demgegenüber kann in der Steuereinrichtung CU gemäß der Erfindung auch ein auf die Blockgrenzen ausgerichteter, aber nur partiell gültiger Datenblock gepuffert sowie lediglich der gültige Datenbereich des gespeicherten Blocks in den Arbeitsspeicher eingeschrieben werden.

Der Steuereinrichtung CU wird die Übertragung eines vollständigen, aus einer maximalen Anzahl von Dateneinheiten, beispielsweise 64 Byte, bestehenden Datenblocks mit nur teilweise gültigen Dateneinheiten anhand eines im Parameterwort ZPAR der Speicheranforderung übertragenen Identifikationszeichens WRI angezeigt. Der zusammenhängende, eine niedrigere Anzahl von Dateneinheiten umfassende, gültige Datenbereich des gespeicherten Datenblocks ist durch eine ebenfalls dem Parameterwort ZPAR entnehmbare Endadresse EAD sowie durch eine in der übertragenen Speicheradresse AD enthaltene Anfangsadresse SAD gekennzeichnet.

Der in den Pufferspeicher BUF vollständig eingetragene 64-Byte-Datenblock wird in einzelne Teilblöcke jeweils gleicher Anzahl von Dateneinheiten, beispielsweise in Doppelwörter mit jeweils 8 Byte, unterteilt. Die Anzahl der vom gültigen Datenbereich erfaßten Teilblöcke wird von einer Auswerte- und Steuereinheit WPB in einfacher Weise aus der Anfangs- und der Endadresse SAD und EAD ermittelt, wobei durch die Anfangsadresse SAD die erste gültige Dateneinheit im ersten gültigen Teilblock sowie durch die Endadresse EAD die letzte gültige Dateneinheit im letzten gültigen Teilblock festgelegt werden. Um eine Übertragung von Daten- und Steuerinformationen zum Arbeitsspeicher durchführen zu können, ist die Zuteilung des Bussystems S-BUS an die Steuereinrichtung CU erforderlich. Daher sendet die Auswerte- und Steuereinheit WPB ein Anfragesignal LREQ und empfängt ein Antwortsignal GRA. Sobald die Benutzung des Bussystems S-BUS durch die Steuereinrichtung CU, erkennbar am Antwortsignal GRA, erlaubt wird, erfolgt von der Auswerte- und Steuereinheit WPB das Setzen eines Haltesignals BHLD zur Belegung des Bussystems S-BUS für die Übertragung der vom gültigen Datenbereich erfaßten Teilblöcke.

Die erfaßten Teilblöcke werden einzeln und nacheinander in Teilübertragungen in den Arbeitsspeicher eingeschrieben. Zu diesem Zweck werden von der Auswerte- und Steuereinheit WPB eine Adresse BA zur Ansteuerung des Pufferspeichers BUF sowie eine individuell für jeden zu übertragenden Teilblock vorgesehene Teilblockadresse ACT eingestellt. In der Auswerte- und Steuereinheit WPB angeordnete Blockzähler für den Daten- und den Steuerpfad werden mit einem Startwert geladen, der mit der ermittelten Anzahl der vom gültigen Datenbereich erfaßten Teilblöcke übereinstimmt. Nach jeder Teilübertragung werden die Blockzähler um einen Zählerwert vermindert und die eingestellten Adressen BA und ACT jeweils um einen durch die Anzahl der Dateneinheiten eines Teilblocks festgelegten Adressenwert, beispielsweise einer Doppelwortadresse, erhöht.

Jede Dateneinheit des im Arbeitsspeicher zu ändernden Teilblocks läßt sich individuell auswählen, indem von der Auswerte- und Steuereinheit WPB Auswahlinformationen für die einzelnen Dateneinheiten des jeweiligen Teilblocks mitübertragen werden. Diese Auswahlinformationen bestehen beispielsweise aus Byteselektoren BS, die abhängig von der Start- und der Endadresse SAD und EAD sowie der ermittelten Anzahl der vom gültigen Datenbereich erfaßten Teilblöcke erzeugt werden. Im Gegensatz zum bekannten Datenstromverfahren, bei dem für die Durchführung eines kontinuierlichen Transfers von Einzelblöcken eines gesamten Datenblocks die Byteselektoren keine Bedeutung haben, werden die Byteselektoren BS beim vorliegenden Datenübertragungsverfahren für jede Teilübertragung individuell gebildet.

Im Steuerpfad werden die bereitgestellten Byteselektoren BS mit dem aus dem Parameterregister COMR ausgelesenen Parameterwort ZPAR in einer Einheit GENP zu einem für jede Teilübertragung individuell festgelegten Parameterwort PAR verknüpft. In gleicher Weise erfolgt in einer Einheit GENA das Mischen der aus dem Adressenregister ADR ausgelesenen Speicheradresse AD mit der von der Auswerte- und Steuereinheit WPB gebildeten Teilblockadresse ACT, so daß sich für jeden zu übertragenden Teilblock eine zugehörige modifizierte Arbeitsspeicheradresse MAD ergibt. Die auf diese Weise erzeugten Adressen- und Steuerinformationen MAD und PAR zur Ansteuerung des Arbeitsspeichers werden jeweils über einen weiteren Umsteuerschalter USS2 durchgeschaltet und gemeinsam in einem Steuerausgangsregister XOR für die anschließende Übertragung über das Bussystem S-BUS gespeichert.

Die aufeinanderfolgenden Übertragungen der vom gültigen Datenbereich erfaßten Teilblöcke zusammen mit den jeweils bereitgestellten Auswahlinformationen für die einzelnen Dateneinheiten des jeweiligen Teilblocks werden beendet, sobald die in der Auswerte- und Steuereinheit WPB vorgesehenen Blockzähler auf den Wert Null eingestellt sind. Mit der Steuereinrichtung gemäß vorliegender Erfindung können zusammenhängende Datenbereiche beliebiger Größe aus dem gesamten 64-Byte-Datenblock in Datenportionen mit beispielsweise einem Doppelwort in den Arbeitsspeicher geschrieben werden, ohne daß Änderungen der Schnittstelle zu den Ein-/Ausgabemodulen und der Arbeitsspeicherschnittstelle erforderlich sind. Die Speicheranforderung, die einem Ein-/Ausgabemodul das Einschreiben nur der gültigen Dateneinheiten des Datenblocks ermöglicht, wird somit in gleicher Weise wie alle übrigen Speicheroperationen vom Speicherzugriffssystem abgewickelt.

Erfolgt während der Übertragung des ersten Teilblocks zum Arbeitsspeicher eine Zurückweisungsmeldung BREJ, die angibt, daß der Teilblock nicht in den Speicher eingeschrieben werden kann, so wird von der Auswerte- und Steuereinheit WPB das Haltesignal BHLD zurückgesetzt und das Bussystem S-BUS wieder freigegeben. Für den Fall, daß die Meldung BREJ während einer der auf die erste Teilübertragung folgenden Teilübertragungen der vom gültigen Datenbereich erfaßten Teilblöcke eines vollständigen Datenblocks auftritt, bleibt das Haltesignal BHLD gesetzt und der nicht erfolgreiche Schreibzugriff wird für den jeweiligen Teilblock erneut durchgeführt.

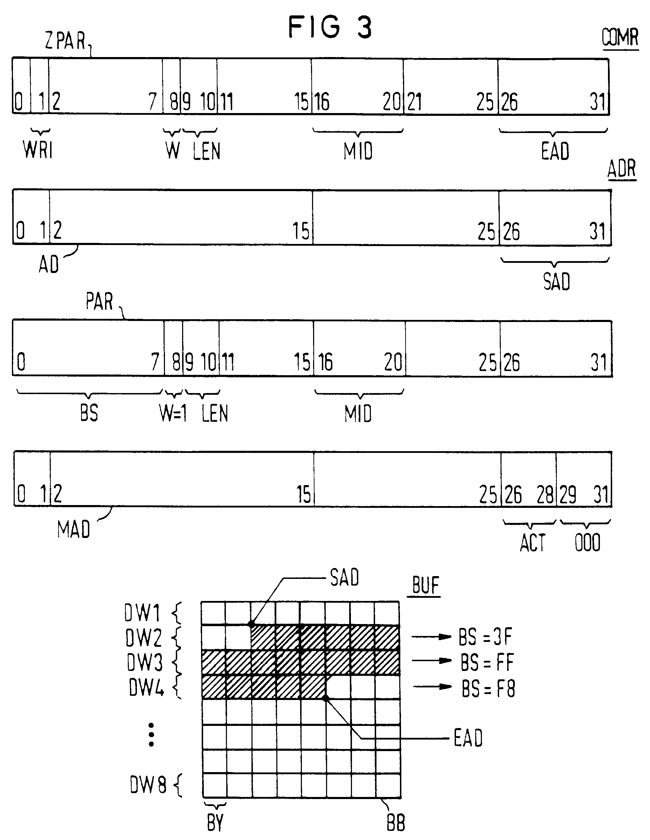

FIG 3 zeigt die Adressen und Parameterwörter zur Steuerung der Datenübertragung der gesonderten Speicheranforderung, bei der ein zusammenhängender, partiell gültiger Datenbereich des zur Steuereinrichtung vollständig übertragenen Datenblocks portionsweise in den Arbeitsspeicher geschrieben wird. Zum besseren Verständnis enthält die FIG 3 außerdem ein Beispiel für einen im Pufferspeicher der Steuereinrichtung vollständig eingetragenen 64-Byte-Datenblock BB, bestehend aus 8 Doppelwörtern DW1...DW8 mit jeweils 8 Byte BY.

Das vom Ein-/Ausgabemodul nach Annahme der Speicheranforderung übertragene und im Parameterregister COMR der Steuereinrichtung gespeicherte Parameterwort ZPAR enthält in der zweiten Bitstelle das Identifikationszeichen WRI, an dessen Zustand (WRI=1) das Vorliegen eines zusammenhängenden, lediglich partiell gültigen Datenbereichs im vollständig übertragenen Datenblock BB erkennbar ist. Da es sich bei der gesonderten Speicheranforderung um eine Schreiboperation zum Arbeitsspeicher handelt, ist auch ein Bit W zur Unterscheidung eines Lese-/Schreibzugriffs im Parameterwort ZPAR gesetzt (W=1). Weitere, für die Steuerung der Datenübertragung zwischen dem anfordernden Ein-/Ausgabemodul und dem Arbeitsspeicher erforderliche Eintragungen im Parameterwort ZPAR betreffen die Länge LEN des zur Steuereinrichtung übertragenen und im Pufferspeicher zwischengespeicherten Datenblocks BB, ein aus mehreren Bitstellen bestehendes Kennzeichen MID zur Identifikation des anfordernden Ein-/Ausgabemoduls, sowie die auf das letzte im Datenblock BB zu schreibende Byte BY hinweisende Endadresse EAD.

Die Startadresse SAD zur Festlegung des ersten, im Datenblock BB zu schreibenden Bytes BY, kann der im Adreßregister ADR der Steuereinrichtung gespeicherten Speicheradresse AD entnommen werden. Im gewählten Beispiel befinden sich das erste gültige Byte BY im zweiten Doppelwort DW2 und das letzte gültige Byte BY im vierten Doppelwort DW4 des 64-Byte-Datenblocks BB.

Im Gegensatz zu dem vom anfordernden Ein-/Ausgabemodul ausgesandten Parameterwort ZPAR weist das für jede Übertragung eines vom gültigen Datenbereich erfaßten Doppelworts modifizierte Parameterwort PAR Byteselektoren BS für die einzelnen Dateneinheiten BY des jeweils zu übertragenden Doppelworts auf. Die Byteselektoren BS werden in der Weise in das neue Parameterwort PAR eingetragen, daß für jede gültige Dateneinheit BY des erfaßten Doppelworts der binäre Zustand "1" gespeichert wird. Für das gewählte Ausführungsbeispiel nehmen die Byteselektoren BS daher die hexadezimalen Werte BS=3F, BS=FF sowie BS=F8 an, die nacheinander jeweils zusammen mit dem zugehörigen Doppelwort DW2, DW3 sowie DW4 zum Arbeitsspeicher übertragen werden. Die zu jedem vom gültigen Datenbereich erfaßten Doppelwort gehörige modifizierte Arbeitsspeicheradresse MAD enthält in den letzten Bitstellen eine von der Auswerte- und Steuereinheit bereitgestellte Doppelwortadresse ACT, wobei das dafür vorgesehene Adressenfeld der Arbeitsspeicheradresse MAD für das erste zu übertragende Doppelwort die Anfangsadresse SAD und für jedes anschließend zu übertragende Doppelwort jeweils einen um eine Doppelwortadresse erhöhten Adressenwert aufweist.

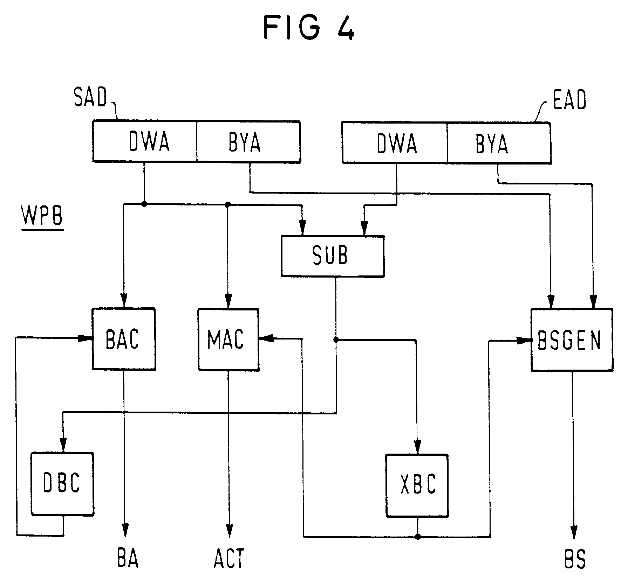

In FIG 4 ist die in der Steuereinrichtung CU gemäß FIG 2 angeordnete Auswerte- und Steuereinheit WPB zur Erzeugung der für die Übertragung der Teilblöcke zum Arbeitsspeicher erforderlichen Adressen und Auswahlinformationen dargestellt. Die im Adreß- bzw. im Parameterregister der Steuereinrichtung gespeicherte Anfangsadresse SAD bzw. Endadresse EAD besteht aus einer Adresse DWA für die Auswahl der einzelnen Doppelworte des 64-Byte-Datenblocks und aus einer Adresse BYA für die Ansteuerung der einzelnen Dateneinheiten (Bytes) eines ausgewählten Doppelworts. Die Auswerte- und Steuereinheit WPB weist eine Subtraktionseinheit SUB auf, in der die Doppelwortadresse der Anfangsadresse SAD von der Doppelwortadresse der Endadresse EAD subtrahiert und somit die Anzahl der vom gültigen Datenbereich erfaßten Doppelwörter im gesamten Datenblock auf einfache Weise ermittelt wird.

Der Subtraktionseinheit SUB sind ein Blockzähler XBC für den Steuerpfad und ein Blockzähler DBC für den Datenpfad nachgeschaltet, die jeweils mit der berechneten Anzahl von Doppelwörtern als Startwert geladen werden. Die Blockzähler XBC und DBC sind mit Adreßzählern MAC und BAC verbunden, von denen der eine Adreßzähler BAC eine Adresse BA für das Auslesen der einzelnen, im Pufferspeicher hinterlegten Doppelwörter liefert, während der andere Adreßzähler MAC eine zu jedem, in den Arbeitsspeicher einzuschreibenden Doppelwort gehörige Speicheradresse ACT bereitstellt.

Zu Beginn der Teilübertragungen empfangen die Adreßzähler BAC und MAC die in der Anfangsadresse SAD enthaltene Doppelwortadresse DWA, die nach jeder Übertragung eines Doppelworts um jeweils eine Doppelwortadresse erhöht wird, bis die vom zusammenhängenden gültigen Datenbereich erfaßten Doppelwörter in den Arbeitsspeicher eingeschrieben sind. Entsprechend der Weiterschaltung der Adressen BA und ACT werden die Blockzähler DBC und XBC um jeweils einen Zählerwert verringert.

Die Auswerte- und Steuereinheit WPB weist eine Einheit BSGEN zur Erzeugung der Auswahlinformationen BS in Form von Byteselektoren auf, die jeweils zusammen mit den Doppelwörtern des gekennzeichneten Datenbereichs nacheinander zum Arbeitsspeicher übertragen werden. Zu diesem Zweck werden die die einzelnen Dateneinheiten eines Doppelworts spezifizierenden Adressen BYA der Anfangs- und der Endadresse SAD und EAD aus den entsprechenden Registern ausgelesen. Mit jeder durchzuführenden Teilübertragung, erkennbar am Zählerstand des für den Steuerpfad vorgesehenen Blockzählers XBC, werden die zu einem Doppelwort gehörigen Byteselektoren BS in der Weise erzeugt, daß für jede gültige Dateneinheit des Doppelworts der binäre Zustand "1" gesetzt wird. Die Byteadresse BYA der gelesenen Anfangsadresse SAD zeigt dabei auf die erste gültige Dateneinheit des ersten gültigen Doppelworts. Bei Identität der Byteadresse BYA mit der Adresse für die ersten Dateneinheit des ersten zu übertragenden Doppelworts nehmen die Byteselektoren BS den hexadezimal codierten Wert BS=FF zur Kennzeichnung eines vollständig gültigen Doppelworts an.

Die Generierung der Byteselektoren BS für die anschließend zu übertragenden Doppelwörter des zusammenhängenden Datenbereichs wird dadurch vereinfacht, daß entsprechend der Einstellung des Blockzählers XBC jeweils der Wert BS=FF für die Byteselektoren BS der einzelnen Doppelwörter eingetragen wird. Erst wenn die Übertragung des letzten, die Endadresse EAD enthaltenden Doppelworts ansteht, wird die zugehörige Byteadresse BYA auf Identität der letzten Dateneinheit des Doppelworts überprüft. Liegt Identität vor, wird ebenfalls der Wert BS=FF automatisch gesetzt. Ansonsten werden die Byteselektoren BS für das letzte zu übertragende Doppelwort gemäß oben genannter Vorgehensweise festgelegt. Die Einheit BSGEN zur Erzeugung der Byteselektoren BS kann beispielsweise als ein Verknüpfungsnetzwerk mit bekannten Schaltgliedern ausgebildet sein.

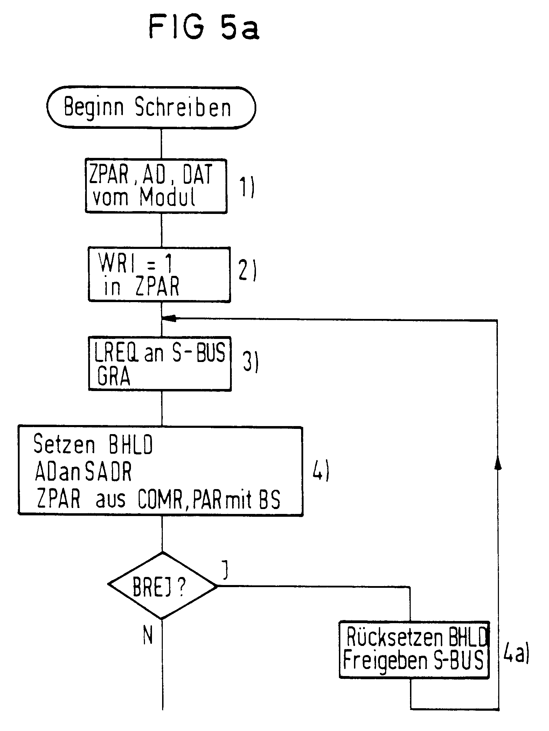

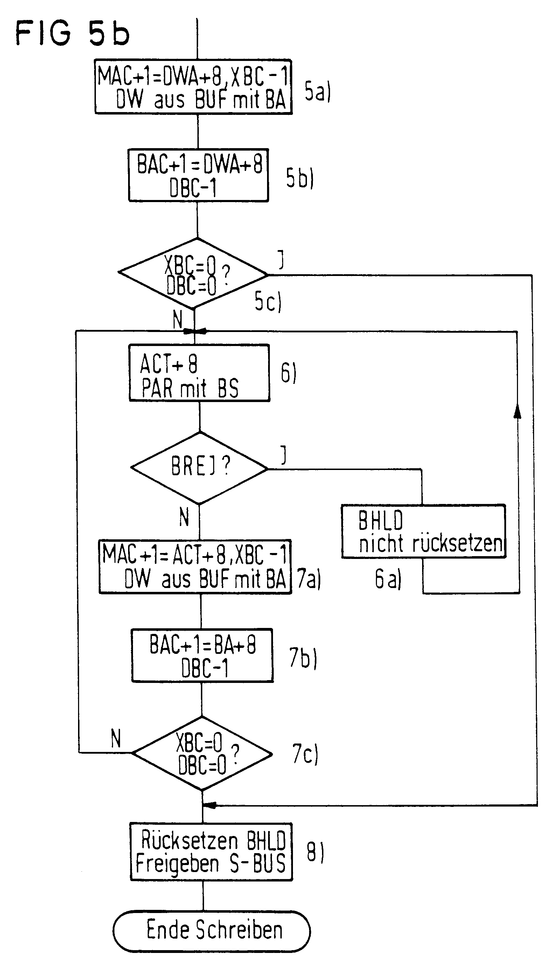

FIG 5a und FIG 5b zeigen die erfindungsgemäße Schreiboperation eines Ein-/Ausgabemoduls zum Arbeitsspeicher anhand eines Ablaufdiagramms. Mit der Annahme der Operation werden in einem Verfahrensschritt 1) vom anfordernden Ein-/Ausgabemodul die Steuerinformationen der Speicheranforderung in Form eines Parameterwortes ZPAR und einer Speicheradresse AD sowie die Daten DAT eines aus einer maximalen Anzahl von Dateneinheiten bestehenden Datenblocks, beispielsweise eines 64-Byte-Datenblocks, zur Steuereinrichtung übertragen. Während eines Verfahrensschrittes 2) erfolgt das Lesen eines Identifikationszeichens WRI im übertragenen Parameterwort ZPAR, wobei das Identifikationszeichen WRI im gesetzten Zustand (WRI=1) die Übertragung eines vollständigen Datenblocks mit nur teilweise gültigen Dateneinheiten anzeigt.

Nach der in einem Verfahrensschritt 3) durchgeführten Bewerbung anhand des Signals LREQ und der Zuteilung des Systembusses S-BUS durch das Signal GRA erfolgt in einem Verfahrensschritt 4) das Setzen eines Haltesignals BHLD zur Belegung des Systembusses S-BUS für die Übertragung der Daten und Steuerinformationen zum Arbeitsspeicher. Im Verfahrensschritt 4) werden darüber hinaus aus den im Adreß- und im Parameterregister ADR und COMR gespeicherten Adressen- und Steuerinformationen AD und ZPAR die Byteselektoren BS für das erste Doppelwort des gekennzeichneten Datenbereichs erzeugt und in das modifizierte, an den Arbeitsspeicher weiterzuleitende Parameterwort PAR eingetragen. Ein Rücksetzen des Haltesignals BHLD und das Freigeben des Systembusses S-BUS in einem nachfolgenden Verfahrensschritt 4a) erfolgt für den Fall, daß durch eine Zurückweisungsmeldung BREJ die Nichtannahme der Daten durch den Arbeitsspeicher mitgeteilt wird.

Zum Auslesen des ersten Doppelworts DW aus dem Pufferspeicher BUF der Steuereinrichtung gemäß dem Verfahrensschritt 5a) in FIG 5b wird eine Adresse BA angelegt, die mit der in der Anfangsadresse des gültigen Datenbereichs enthaltenen Doppelwortadresse übereinstimmt. Überlappend zum Einschreiben des ersten Doppelworts zusammen mit den zugehörigen Byteselektoren in den Arbeitsspeicher wird ein mit der Doppelwortadresse DWA der Anfangsadresse geladener Adreßzähler MAC um einen Adressenwert, d.h. eine Doppelwortadresse, erhöht. Dabei nimmt der mit dem Adreßzähler MAC gekoppelte Blockzähler XBC einen um einen Zählerwert verminderten Zählerstand ein.

Ebenso werden im Verfahrensschritt 5b) der Adreßzähler BAC und der zugehörige, für den Datenpfad vorgesehene Blockzähler DBC um jeweils einen Adressen- und Zählerwert weitergeschaltet, sobald das Auslesen des ersten Doppelworts aus dem Pufferspeicher BUF beendet ist. An den Verfahrensschritt 5b) schließt sich ein Verfahrensschritt 5c) an, bei dem der Zählerstand des jeweiligen Blockzählers XBC bzw. DBC mit dem Wert Null verglichen wird, der die Endebedingung für die Übertragungen der Doppelwörter des gekennzeichneten Datenbereichs darstellt.

Sind noch nicht alle Teilübertragungen ausgeführt, werden der auf die zuletzt modifizierte Doppelwortadresse ACT eingestellte Adreßzähler gemäß dem Verfahrensschritt 6) wiederum um einen Adressenwert erhöht und die Byteselektoren BS für die Übertragung des zweiten Doppelworts zusammen mit dem modifizierten Parameterwort PAR eingetragen. Tritt während dieses Verfahrensschritts die Zurückweisungsmeldung BREJ auf, werden das gesetzte Haltesignal BHLD in einem Verfahrensschritt 6a) aufrechterhalten und der zuvor ausgeführte Verfahrensschritt 6) wiederholt.

Im Verfahrensschritt 7a) erfolgt die Auswahl des aus dem Pufferspeicher BUF auszulesenden und in den Arbeitsspeicher einzuschreibenden zweiten Doppelworts DW anhand der vom Adreßzähler BAC eingestellten Pufferspeicheradresse BA. Überlappend dazu werden der für den Steuerpfad vorgesehene Adreßzähler MAC um eine Doppelwortadresse erhöht und sein zugehöriger Blockzähler XBC analog zum Verfahrensschritt 5a) um einen Zählerwert vermindert. Im Verfahrensschritt 7b) werden wiederum der Adreßzähler BAC und der Blockzähler DBC um einen Adressen- bzw. Zählerwert verändert. Daran schließt sich im Verfahrensschritt 7c) analog zum Verfahrensschritt 5c) die Abfrage der Zählerstände der Blockzähler XBC und DBC an, ob die Anzahl der Doppelwörter des zusammenhängen gültigen Datenbereichs bereits in den Arbeitsspeicher eingeschrieben ist.

Für den Fall, daß alle vom Datenbereich erfaßten Doppelwörter des 64-Byte-Datenblocks im Arbeitsspeicher vorliegen (XBC=0, DBC=0), werden das Haltesignal BHLD von der Steuereinrichtung zurückgesetzt und der Systembus S-BUS wieder freigegeben. Ansonsten folgt auf den Verfahrensschritt 7c) jeweils der Verfahrensschritt 6) für die aufeinanderfolgende Übertragung weiterer Doppelwörter DW des gekennzeichneten Datenbereichs zusammen mit den jeweils zugehörigen Byteselektoren BS.

**Patentansprüche**

1. Steuereinrichtung zur Steuerung der Datenübertragung zwischen einem von mehreren Ein-/Ausgabemodulen (M1...Mn) und dem Arbeitsspeicher (ASP) einer Datenverarbeitungsanlage, bei der eine Übertragung von Daten und Steuerinformationen jeweils auf Anforderung eines der Ein-/Ausgabemodule (M1...Mn) ausgelöst und mit jeder Anforderung eine der Datenbreite an der Arbeitsspeicherschnittstelle entsprechende Anzahl von Dateneinheiten (BY) mit zugehörigen Auswahlinformationen (BS) für die einzelnen Dateneinheiten zum Arbeitsspeicher (ASP) übertragen werden, und bei der bei der Durchführung eines kontinuierlichen Datentransfers in Form eines ununterbrochenen Datenstromes ein aus einer vorgegebenen maximalen Anzahl von Dateneinheiten (BY) bestehender vollständiger Datenblock (BB) in einem Pufferspeicher (BUF) der Steuereinrichtung (CU) zwischengespeichert wird, **dadurch gekennzeichnet,**

   - daß mit einer Anforderung von dem jeweiligen Ein-/Ausgabemodul (z.B. M1) Steuerinformationen (ZPAR,AD) zur Kennzeichnung eines zusammenhängenden, aus einer niedrigeren Anzahl von Dateneinheiten (BY) bestehenden, gültigen Bereichs zusammen mit dem jeweiligen Datenblock (BB) bereitgestellt und an die Steuereinrichtung (CU) übertragen werden,
   - daß die Steuerinformationen (ZPAR) ein Identifikationszeichen (WRI) enthalten, das die Übertragung eines vollständigen Datenblocks (BB) in den Pufferspeicher (BUF) mit nur teilweise gültigen Dateneinheiten anzeigt,
   - daß in der Steuereinrichtung (CU) der übertragene Datenblock (BB) in einzelne Teilblöcke (z.B. DW1...DW8) mit jeweils gleicher Anzahl von Dateneinheiten (BY) unterteilt und anhand der bereitgestellten Steuerinformationen (ZPAR,AD) die Anzahl der vom gültigen Datenbereich erfaßten Teilblöcke (z.B. DW2...DW4) ermittelt wird, und
   - daß anschließend nur die erfaßten Teilblöcke (z.B. DW2...DW4) zusammen mit jeweils aus den Steuerinformationen (ZPAR, AD) abgeleiteten Auswahlinformationen (BS) für die einzelnen Dateneinheiten (BY) des jeweiligen Teilblockes (z.B. DW2) nacheinander zum Arbeitsspeicher (ASP) übertragen werden.

2. Steuereinrichtung nach Anspruch 1, **dadurch gekennzeichnet,** daß die von dem Ein-/Ausgabemodul (z.B. M1) bereitgestellten Steuerinformationen (ZPAR,AD) eine Anfangs- und eine Endadresse (SAD und EAD) zur Festlegung des zusammenhängenden Bereichs der gültigen Dateneinheiten enthalten.

3. Steuereinrichtung nach Anspruch 2, **dadurch gekennzeichnet,** daß durch die Anfangsadresse (SAD) die erste gültige Dateneinheit im ersten gültigen Teilblock (z.B. DW2) sowie durch die Endadresse (EAD) die letzte gültige Dateneinheit im letzten gültigen Teilblock (z.B. DW4) angegeben werden.

4. Steuereinrichtung nach einem der Ansprüche 1 bis 3, **dadurch gekennzeichnet,** daß für jede Übertragung eines Teilblocks (z.B. DW2...DW4) eine zugehörige Adresse (MAD) erzeugt und an den Arbeitsspeicher (ASP) übergeben wird, wobei die bereitgestellte Adresse (MAD) eine zur Ansteuerung des Teilblocks im Arbeitsspeicher (ASP) vorgesehene Teilblockadresse (ACT) aufweist.

5. Steuereinrichtung nach den Ansprüche 2, 3 und 4, **dadurch gekennzeichnet,** daß die Teilblockadresse (ACT) jeweils von einem Adreßzähler (MAC) geliefert wird, der mit der Anfangsadresse (SAD) geladen und nach Durchführung jeder Teilübertragung jeweils um einen durch die Anzahl der Dateneinheiten (BY) eines Teilblocks (z.B. DW2) festgelegten Adressenwert erhöht wird.

6. Steuereinrichtung nach einem der Ansprüche 2 bis 5, **dadurch gekennzeichnet**, daß die Auswahlinformationen (BS) für die einzelnen Dateneinheiten (BY) eines Teilblocks (z.B. DW2) abhängig von der jeweils von dem Ein-/Ausgabemodul (z.B. M1) übertragenen Anfangs- und der Endadresse (SAD und EAD) gebildet werden.

7. Steuereinrichtung nach Anspruch 6, **dadurch gekennzeichnet,** daß zur Bildung der Auswahlinformationen (BS) ein der Gültigkeit oder Nichtgültigkeit entsprechender binärer Wert für jede Dateneinheit (BY) eines Teilblocks (z.B. DW2) gesetzt und zu den bereitgestellten Steuerinformationen (ZPAR) hinzugefügt wird.

8. Steuereinrichtung nach einem der Ansprüche 1 bis 7, **dadurch gekennzeichnet,** daß mindestens ein Blockzähler (z.B. XCT) mit einem der Anzahl der nacheinander zum Arbeitsspeicher (ASP) zu übertragenden Teilblöcke (z.B. DW2...DW4) entsprechenden Startwert geladen und nach Durchführung jeder Übertragung eines Teilblocks (z.B. DW2) jeweils um einen Zählerwert vermindert wird.

9. Steuereinrichtung nach den Ansprüchen 4, 7 und 8, **dadurch gekennzeichnet,** daß jeweils ein eigener Blockzähler (XCT bzw. BCT) für die Steuerung des Auslesens der einzelnen Teilblöcke aus dem Pufferspeicher (BUF) und für die Steuerung der Bereitstellung der Teilblockadressen (ACT) und der modifizierten Steuerinformationen (PAR) vorgesehen ist.

10. Steuereinrichtung nach einem der Ansprüche 1 bis 9, **dadurch gekennzeichnet,** daß ein zur Ansteuerung des Pufferspeichers (BUF) vorgesehener Adreßzähler (BAC) auf eine Adresse für den ersten zu übertragenden Teilblock (z.B. DW2) eingestellt und nach jeder Teilübertragung um einen durch die Anzahl der Dateneinheiten (BY) eines Teilblocks (z.B. DW2) festgelegten Adressenwert erhöht wird.

**Claims**

1. Controller for controlling the data transfer between one of a plurality of input/output modules (M1...Mn) and the main memory (ASP) of a data processing system, in which a transfer of data and control information items is triggered in each case at the request of one of the input/output modules (M1...Mn) and, with each request, a number, corresponding to the data width at the main memory interface, of data units (BY) with associated selection information items (BS) for the individual data units are transferred to the main memory (ASP) and in which, in the case of the implementation of a continuous data transfer in the form of an uninterrupted data stream, a complete data block (BB), comprising a predetermined maximum number of data units (BY), is buffer-stored in a buffer memory (BUF) of the controller (CU), characterized

   - in that, with a request from the respective input/output module (e.g. M1), control information items (ZPAR, AD) for identifying a contiguous valid area, comprising a relatively small number of data units (BY), together with the respective data block (BB) are made available and transferred to the controller (CU),
   - in that the control information items (ZPAR) contain an identification character (WRI), which indicates the transfer of a complete data block (BB) into the buffer memory (BUF) with only partly valid data units,
   - in that, in the controller (CU) the transferred data block (BB) is subdivided into individual sub-blocks (e.g. DW1...DW8) each having the same number of data units (BY) and the number of sub-blocks (e.g. DW2...DW4) encompassed by the valid data area is determined using the control information items (ZPAR,AD) made available, and
   - in that subsequently only the encompassed sub-blocks (e.g. DW2...DW4) together with selection information items (BS), in each case derived from the control information items (ZPAR,AD), for the individual data units (BY) of the respective sub-block (e.g. DW2) are successively transferred to the main memory (ASP).

2. Controller according to Claim 1, characterized in that the control information items (ZPAR,AD) made available by the input/output module (e.g. M1) contain a start address and an end address (SAD and EAD) for defining the contiguous area of the valid data units.

3. Controller according to Claim 2, characterized in that the start address (SAD) specifies the first valid data unit in the first valid sub-block (e.g. DW2) and the end address (EAD) specifies the last valid data unit in the last valid sub-block (e.g. DW4).

4. Controller according to one of Claims 1 to 3, characterized in that for each transfer of a sub-block (e.g. DW2...DW4) an associated address (MAD) is generated and passed to the main memory (ASP), the address (MAD) made available having a sub-block address (ACT) provided for addressing the sub-block in the main memory (ASP).

5. Controller according to Claims 2, 3, and 4, characterized in that the sub-block address (ACT) is supplied in each case by an address counter (MAC), which is loaded with the start address (SAD) and is incremented in each case by an address value defined by the number of data units (BY) of a sub-block (e.g. DW2), after the performance of each partial transfer.

6. Controller according to one of Claims 2 to 5, characterized in that the selection information items (BS) for the individual data units (BY) of a sub-block (e.g. DW2) are formed in a manner dependent on the start and end addresses (SAD and EAD) respectively transferred from the input/output module (e.g. M1).

7. Controller according to Claim 6, characterized in that, in order to form the selection information items (BS), a binary value corresponding to validity or non-validity is set for each data unit (BY) of a sub-block (e.g. DW2) and added to the control information items (ZPAR) made available.

8. Controller according to one of Claims 1 to 7, characterized in that at least one block counter (e.g. XCT) is loaded with a start value corresponding to the number of sub-blocks (e.g. DW2...DW4) to be transferred successively to the main memory (ASP) and is decremented in each case by a counter value after the performance of each transfer of a sub-block (e.g. DW2).

9. Controller according to Claims 4, 7 and 8, characterized in that a dedicated block counter (XCT and BCT) is respectively provided for the control of the reading of the individual sub-blocks from the buffer memory (BUF) and for the control of the provision of the sub-block addresses (ACT) and of the modified control information items (PAR).

10. Controller according to one of Claims 1 to 9, characterized in that an address counter (BAC), which is provided for addressing the buffer memory (BUF) is set to an address for the first sub-block (e.g. DW2) to be transferred and is incremented by an address value, defined by the number of data units (BY) of a sub-block (e.g. DW2), after each partial transfer.

**Revendications**

1. Dispositif de commande pour commander la transmission de données entre un parmi plusieurs modules d'entrée/sortie (M1 à Mn) et la mémoire de travail (ASP) d'une installation de traitement de données, dans lequel une transmission de données et d'informations de commande est déclenchée à chaque fois à la demande de l'un des modules d'entrée/sortie (M1 à Mn) et, à chaque demande, un nombre, correspondant à la largeur de données dans l'interface de mémoire de travail, d'unités de données (BY) sont transmises à la mémoire de travail (ASP) avec des informations de sélection associées (BS) pour les unités de données individuelles et dans lequel, lors de la mise en oeuvre d'un transfert de données continu sous la forme d'un flux de données ininterrompu, un bloc de données (BB) complet constitué d'un nombre maximal prescrit d'unités de données (BY) est mémorisé temporairement dans une mémoire tampon (BUF) du dispositif de commande (CU), caractérisé par le fait que

- avec une demande, le module d'entrée/sortie respectif (par exemple M1) fournit des informations de commande (ZPAR, AD) pour caractériser une zone valide continue, constituée d'un plus petit nombre d'unités de données (BY), avec le bloc de données respectif (BB) et il les transmet au dispositif de commande (CU),
- les informations de commande (ZPAR) contiennent une marque d'identification (WRI) qui indique la transmission d'un bloc de données complet (BB) dans la mémoire tampon (BUF) avec des unités de données seulement partiellement valides,
- dans le dispositif de commande (CU), le bloc de données (BB) à transmettre est divisé en sous-blocs individuels (par exemple DW1 à DW8) ayant chacun le même nombre d'unités de données (BY) et le nombre des sous-blocs (par exemple DW2 à DW4) compris par la zone de données valide est déterminé à l'aide des informations de commande fournies (ZPAR, AD), et
- ensuite, seuls les sous-blocs compris (par exemple DW2 à DW4) sont transmis successivement à la mémoire de travail (ASP) conjointement aux informations de sélection (BS) déduites des informations de commande (ZPAR, AD) pour les unités de données (BY) individuelles du sous-bloc respectif (par exemple DW2).

2. Dispositif de commande selon la revendication 1, caractérisé par le fait que les informations de commande (ZPAR, AD) fournies par le module d'entrée/sortie (par exemple M1) contiennent une adresse de début (SAD) et une adresse de fin (EAD) pour fixer la zone continue des unités de données valides.

3. Dispositif de commande selon la revendication 2, caractérisé par le fait que l'adresse de début (SAD) indique la première unité de données valide dans le premier sous-bloc valide (par exemple DW2) et l'adresse de fin (EAD) indique la dernière unité de données valide dans le dernier sous-bloc valide (par exemple DW4).

4. Dispositif de commande selon l'une des revendications 1 à 3, caractérisé par le fait que, pour chaque transmission d'un sous-bloc (par exemple DW2 à DW4), une adresse (MAD) associée est produite et est transmise à la mémoire de travail (ASP), l'adresse (MAD) fournie comportant une adresse de sous-bloc (ACT) prévue pour le contrôle du sous-bloc dans la mémoire de travail (ASP).

5. Dispositif de commande selon les revendications 2, 3 et 4, caractérisé par le fait que l'adresse de sous-bloc (ACT) est fournie à chaque fois par un compteur d'adresses (MAC) qui est chargé avec l'adresse de début (SAD) et qui, après l'exécution de chaque transmission partielle, est augmenté à chaque fois d'une valeur d'adresse fixée par le nombre des unités de données (BY) d'un sous-bloc (par exemple DW2).

6. Dispositif de commande selon l'une des revendications 2 à 5, caractérisé par le fait que les informations de sélection (BS) pour les unités de données (BY) individuelles d'un sous-bloc (par exemple DW2) sont formées en fonction des adresses de début et de fin (SAD et EAD) transmises à chaque fois par le module d'entrée/sortie (par exemple M1).

7. Dispositif de commande selon la revendication 6, caractérisé par le fait que, pour former les informations de sélection (BS), une valeur binaire correspondant à la validité ou à la non-validité est affectée pour chaque unité de données (BY) d'un sous-bloc (par exemple DW2) et est ajoutée aux informations de commande (ZPAR) fournies.

8. Dispositif de commande selon l'une des revendications 1 à 7, caractérisé par le fait qu'au moins un compteur de blocs (par exemple XCT) est chargé avec une valeur initiale correspondant au nombre des sous-blocs (par exemple DW2 à DW4) à transmettre successivement à la mémoire de travail (ASP) et qu'il est diminué à chaque fois d'une valeur de compteur après exécution de chaque transmission d'un sous-bloc (par exemple DW2).

9. Dispositif de commande selon les revendications 4, 7 et 8, caractérisé par le fait que, à chaque fois, un compteur de blocs particulier (XCT ou BCT) est prévu pour la commande de la lecture des sous-blocs individuels dans la mémoire tampon (BUF) et pour la commande de la préparation des adresses de sous-blocs (ACT) et des informations de commande modifiées (PAR).

10. Dispositif de commande selon l'une des revendications 1 à 9, caractérisé par le fait qu'un compteur d'adresses (BAC) prévu pour le contrôle du tampon de données (BUF) est réglé sur une adresse pour le premier sous-bloc (par exemple DW2) à transmettre et il est augmenté après chaque transmission partielle d'une valeur d'adresse fixée par le nombre des unités de données (BY) d'un sous-bloc (par exemple DW2).

# FIG 1

# FIG 2

# FIG 3

COMR

ZPAR

| 0 | 1 | 2      7 | 8 | 9 | 10 | 11     15 | 16     20 | 21    25 | 26     31 |

WRI       W LEN       MID       EAD

ADR

| 0 | 1 | 2      15 |     25 | 26     31 |

AD       SAD

PAR

| 0     7 | 8 | 9 | 10 | 11    15 | 16     20 |    25 | 26     31 |

BS      W=1 LEN      MID

| 0 | 1 | 2     15 |    25 | 26    28 | 29    31 |

MAD       ACT    000

SAD     BUF

DW1
DW2   → BS = 3F
DW3   → BS = FF
DW4   → BS = F8

⋮

DW8

EAD

BY      BB

# FIG 4

# FIG 5a

Beginn Schreiben

ZPAR, AD, DAT
vom Modul                1)

WRI = 1
in ZPAR                  2)

LREQ an S-BUS
GRA                      3)

Setzen BHLD
AD an SADR                           4)
ZPAR aus COMR, PAR mit BS

BREJ ?        J

N

Rücksetzen BHLD
Freigeben S-BUS        4a)

# FIG 5b